(19) Europäisches Patentamt

European Patent Office

Office européen des brevets

(11) EP 0 646 616 B1

(12) **EUROPÄISCHE PATENTSCHRIFT**

(45) Veröffentlichungstag und Bekanntmachung des Hinweises auf die Patenterteilung:
**05.03.1997 Patentblatt 1997/10**

(51) Int Cl.6: **C08G 77/12**, C08G 77/50, C08G 77/38

(21) Anmeldenummer: **94114942.9**

(22) Anmeldetag: **22.09.1994**

(54) **Organopolysiloxane mit bifunktionellen endständigen Siloxaneinheiten**

Organopolysiloxanes having bifunctional siloxane end groups

Organopolysiloxanes ayant des unités terminales bifonctionnelles

(84) Benannte Vertragsstaaten:
**AT BE CH DE ES FR GB IT LI NL**

(30) Priorität: **23.09.1993 DE 4332425**

(43) Veröffentlichungstag der Anmeldung:
**05.04.1995 Patentblatt 1995/14**

(73) Patentinhaber: **Wacker-Chemie GmbH
81737 München (DE)**

(72) Erfinder:
• **Stepp, Michael, Dr.
D-84489 Burghausen (DE)**
• **John, Peter, Dr.
D-84489 Burghausen (DE)**

(56) Entgegenhaltungen:
EP-A- 0 251 435     EP-A- 0 412 550
EP-A- 0 431 173     EP-A- 0 516 143
US-A- 4 737 563     US-A- 4 849 491

**Beschreibung**

Die Erfindung betrifft Organopolysiloxane mit bifunktionellen endständigen Siloxaneinheiten und ein Verfahren zu deren Herstellung.

Eine höhere Dichte an funktionellen Gruppen in den Kettenenden eines Siloxans bewirkt eine Reihe von erwünschten Eigenschaften, wie bessere Einvernetzbarkeit oder höhere Polarität, die zu einer besseren Oberflächen-Wirksamkeit führen können.

Bifunktionelle Gruppen an den Kettenenden eines Siloxans werden häufig durch Umsetzung eines Polysiloxans unter Äquilibrierbedingungen mit einem Disiloxan erhalten, welches an einem Siliciumatom die bifunktionelle Gruppe aufweist. Jedoch können nur solche bifunktionellen Gruppen eingeführt werden, welche unter Äquilibrierbedingungen stabil sind. Bei Polysiloxanen mit nur einem funktionellen Kettenende oder mit verschiedenen Endgruppen erhält man bei diesen Verfahren eine unerwünschte statistische Endgruppen-Verteilung.

Selektiver kann eine bifunktionelle Gruppe durch Hydrosilylierung einer ungesättigten, zwei funktionelle Gruppen aufweisenden Verbindung an die Kettenenden eines Siloxans mit endständigen SiH-Gruppen gebunden werden. Derartige ungesättigte Verbindungen sind jedoch nicht oder nur in schaftlicher Weise verfügbar.

Einfacher ist es, Endgruppen in Polysiloxane einzuführen, welche die Möglichkeit der mehrfachen Hydrosilylierung mit leichtverfügbaren ungesättigten Verbindungen eröffnen, also Endgruppen mit mehreren, möglichst gleichartig reaktiven, d.h. äquivalenten Si-H-Funktionen.

Die Einführung zweier bzw. dreier gleichartig reaktiver Si-H-Reste in ein monofunktionelles Öl ist in EP-A 516 143 beschrieben. Einen Nachteil dieses Verfahrens stellt jedoch die mehrstufige Synthese dar. Zuerst wird ein monofunktionelles Polysiloxan durch z.B. anionische Ringöffnungspolymerisation von Hexamethylcyclotrisiloxan mit Lithiumbutylat als Initiator hergestellt. Die "lebende" Silanolat-Endgruppe oder (nach Hydrolyse) Silanol-Endgruppe kann anschließend mit einem Chlorsiloxan umgesetzt werden, welches z.B. durch Hydrosilylierung von Vinyldimethylchlorsilan mit $(HSiMe_2O)_3SiMe$ oder $(H-SiMe_2O)_4Si$ im stöchiometrischen Verhältnis 1:1 zugänglich ist. Bei der Hydrosilylierung muß mit großen Überschüssen des H-Siloxans gearbeitet werden, da sonst nur geringe Ausbeuten zu erzielen sind. Eine saubere Trennung von mehrfach substituierten Produkten ist nur durch Destillation möglich. Dieses Verfahren besitzt jedoch noch andere Nachteile: erstens muß ein Überschuß der Chlorverbindung zu dem monofunktionellen Polysiloxan zugesetzt werden, da sonst verbleibende Silanol- bzw. Silanolatgruppen oder Spuren an LiOH durch Zersetzung der Si-H-Gruppen die Stabilität des Endproduktes gefährden könnten. Der Überschuß dieser hochsiedenden korrosiven Substanz muß allerdings nach der Umsetzung wieder aus der Mischung vollständig abdestilliert werden, da durch Hydrolyse verbleibender Cl-Si-Einheiten im Endprodukt HCl gebildet würde, was bekanntermaßen zu Gerüstumlagerungen in Si-H-Endgruppen-haltigen Siloxanen und damit zur Instabilität des Endproduktes führen müßte. Bei Einsatz eines Mono-OH-Öls kann auf den Einsatz einer Hilfsbase wie Triethylamin zur Neutralisation der entstehenden HCl nicht verzichtet werden. Die Folge ist ein zusätzlicher Filtrationsschritt nach beendeter Reaktion zur Abtrennung der gebildeten, meist schwer abtrennbaren Ammoniumchloride.

Der vorliegenden Erfindung liegt die Aufgabe zugrunde, Organopolysiloxane mit bifunktionellen endständigen Siloxaneinheiten über ein einfaches selektives, ohne aufwendige Reinigungsschritte durchführbares Verfahren bereitzustellen.

Gegenstand der Erfindung sind Organopolysiloxane der allgemeinen Formel 1

$$[R^1Si(OSiR^2{}_2X)_2OSiR^2{}_2O_{1/2}]_a[R_3SiO_{1/2}]_b[R_2SiO]_c$$

$$[RSiO_{3/2}]_d[SiO_2]e \qquad\qquad (1),$$

worin

| | |
|---|---|
| **R** | gleiche oder verschiedene, gegebenenfalls substituierte $C_1$- bis $C_{18}$-Kohlenwasserstoffreste, |
| **R$^1$** | einen gegebenenfalls substituierten $C_6$- bis $C_{15}$-Kohlenwasserstoffrest, der mindestens einen Phenylring enthält, |
| **R$^2$** | einen $C_1$- bis $C_3$-Kohlenwasserstoffrest, |
| **X** | -ein Wasserstoffatom oder eine über einen zweiwertigen, gegebenenfalls substituierten $C_2$- bis $C_{15}$-Kohlenwasserstoffrest gebundene organische oder siliciumorganische, funktionelle Gruppe, wobei eine oder mehrere Methyleneinheiten des Kohlenwasserstoffrests durch beidseitig an Kohlenstoffatome gebundene Sauerstoffatome ersetzt sein können, |
| **a** | eine ganze Zahl im Wert von mindestens 1 und |
| **b, c, d** und **e** | jeweils unabhängig voneinander den Wert von 0 oder eine positive ganze Zahl bedeuten, und die |

2

Summe von **a, b, c, d** und **e** mindestens 3 beträgt oder

$$(HSiMe_2O)_2SiPh-O-SiMe_2-O-SiMe_3,$$

wobei Me Methyl und Ph Phenyl bedeutet.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentyl-rest; Hexylreste, wie der n-Hexylrest; Heptylreste, wie der n-Heptylrest; Octylreste, wie der n-Octylrest und iso-Octyl-reste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest und der 2-Phenylpropylrest.

Beispiele für substituierte Reste **R** sind Cyanalkylreste, wie der β-Cyanethylrest; halogenierte Kohlenwasserstoffreste, beispielsweise Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m- und p-Chlorphenylrest und Alkoxykohlenwasserstoffreste mit $C_1$- bis $C_{10}$-Alkoxyresten, wie der Methoxyethylrest.

Bevorzugte Beispiele für den Rest **R** sind $c_{1-8}$-Alkylreste, insbesondere der Methylrest.

Beispiele für Reste $\mathbf{R^1}$ sind die vorstehend für den Rest **R** genannten Beispiele für gegebenenfalls substituierte Phenylreste, Alkarylreste und Aralkylreste. Bevorzugte Beispiele für Reste $\mathbf{R^1}$ sind Phenyl-, 2-Phenylethyl-, 1-Phenylethyl-, 1-Phenylpropyl-, 2-Phenylpropyl-, 3-Phenylpropyl-, 4-Chlorphenyl-, 2,4-Dichlorphenyl-, 4-Fluorphenylreste. Vorzugsweise steht $\mathbf{R^1}$ für den Phenyl-, den 2-Phenylpropyl- oder den 2-Phenylethylrest, besonders bevorzugt für den Phenyl- oder den 2-Phenylpropylrest.

Besonders bevorzugt sind die Alkylphenylreste $\mathbf{R^1}$, bei denen der Phenylrest über einen zweiwertigen $C_1$- bis $C_3$-Alkylenrest am Siliciumatom gebunden ist, und der Phenylrest.

Die Reste $\mathbf{R^2}$ sind der Methyl-, Ethyl-, n-Propyl- und iso-Propylrest, wobei der Ethyl- und insbesondere der Methylrest bevorzugt sind.

Beispiele für Reste X sind:

$C_2$- bis $C_{20}$-Alkenylreste, wie die Reste E-4-Hexen-1-yl-, Z-4-Hexen-1-yl-, 5-Hexen-1-yl-, 3-Buten-1-yl-, 2-Buten-1-yl-, 6-Methyl-6-hepten-1-yl-, (Bicyclo[2.2.1.]hept-1-en-4-yl)-1-ethyl-, 1-Cyclododeca-4,8-dienyl-, (Cyclohex-1-en-4-yl)-1-ethyl-, Cyclopentenyl-, Cyclohexenyl-, Cyclooctenyl-, Cycloocta-2,4,6-trienyl-, $-(CH_2)_3-O-CH=CH-CH_3$, $-(CH_2)_3-O-CH_2-CH=CH_2$, $-CH=CH-CH(CH_3)-OCH_2CH=CH_2$, $-C(=CH_2)-CH(CH_3)-OCH_2CH=CH_2$, $-C(=CHCH_2OCH_2CH=CH_2)-CH_2OCH_2CH=CH_2$ und $-C(=CHCH(CH_3)-OCH_2CH=CH_2)-CH(CH_3)-OCH_2CH=CH_2$;

$C_4$- bis $C_{20}$-Epoxyreste, wie die Reste $-(CH_2)_3-O-CH_2-CHOCH_2$, $-(CH_2)_3(OCH_2CH_2)_4-O-CH_2-CHOCH_2$, $-(CH_2CH_2)-(Cyclohexenoxid)$ und $-CH_2CH(CH_2OCH_2CHOCH_2)_2$;

$C_5$- bis $C_{20}$-(Meth)Acrylreste, wie die Reste $-(CH_2)_3-OOCCH=CH_2$, $-(CH_2)_3-OOCC(CH_3)=CH_2$, $-(CH_2)_3-(OCH_2CH_2)_4-OOCC(CH_3)=CH_2$, $-(CH_2)_3-NHOCCH=CH_2$, $-(CH_2)_3-ONHCC(CH_3)=CH_2$, $-(CH_2)_{11}-OOCCH=CH_2$, $-(CH_2)_{11}-OOCC(CH_3)=CH_2$, $-(CH_2)_3-O-CH_2-CH[OOCC(CH_3)=CH_2]-CH_2-OOCC(CH_3)=CH_2$, $-C(=CH_2)-CH_2OCH_2CH_2OOCCH=CH_2$ und $-CH_2OCH_2CH_2OOCCH=CH_2$;

gegebenenfalls silylierte Aminoalkylreste, wie die Reste $-(CH_2)_3-NH-(CH_2)_2-NH_2$, $-(CH_2)_3(OCH_2CH_2)_4-NMe_2$, $-(CH_2)_3-NH_2$, $-(CH_2)_3-NH-SiMe_3$, $-(CH_2)_3-N(SiMe_3)_2$, $-(CH_2)_3-N(Imidazol)$, $-(CH_2)_3-N(Morpholin)$ und $-(CH_2)_3-NH(Cyclohexyl)$; Imido- oder Amidoalkylreste, wie die Reste $-(CH_2)_3-(N-Phthalimido)$, $-CH_2-CH-[CH_2-(N-Phthalimido)]_2-$; gegebenenfalls eine Silyl- oder Acetonidendgruppe aufweisende $C_3$- bis $C_{20}$-Hydroxy(ar)alkylreste, wie die Reste $-(CH_2)_3-OSiMe_3$, $-(CH_2)_3-O-CH_2-CH[OSiMe_3)]-CH_2-OSiMe_3$, $-(CH_2)_3-OH$, $-(CH_2)_3-O-CH_2-CH(OH)-CH_2-OH$ (oder entsprechendes Acetonid), $-(CH_2)_{11}-OH$, $-(CH_2)_4-OH$, $-(CH_2)_3-p-C_6H_4OSiMe_3$, $-(CH_2)_3-O-p-C_6H_4OSiMe_3$, $-(CH_2)_3-O-sym-C_6H_3(OSiMe_3)_2$, $-(CH_2)_{11}-O-SiMe_3$, $-CH=CHCH_2OCH_2CH_2OH$, $-C(=CH_2)-CH_2OCH_2CH_2OH$, $-C(=CH-CH_2OCH_2CH_2OH)-CH_2OCH_2CH_2OH$, $-CH=CH-C(OH)(CH_3)_2$ und $-C(=CH_2)C(OH)(CH_3)_2$;

$C_3$- bis $C_{20}$-Carboxy(ar)alkylreste, wie die Reste 2-Allylbernsteinsäureanhydrid-Addukt(= $-CH_2-CH_2-CH_2-CH-CH_2-CO-O-CO-$), $-(CH_2)_{10}-COOSiMe_3$, $-(CH_2)_{10}-COOH$, $-CH_2-CH_2-COOMe$, $-CH_2-CH_2-COOSiMe_3$, $-CH_2-CH(CH_3)COOMe$, $-CH_2-CH_2-COO-(CH_2-CH_2-O)_4Me$, $-(CH_2)_{10}-COO-CH=CH_2$ und $-(CH_2)_3-OOCCH_3$;

$C_3$- bis $C_{40}$-Silylalkylreste, wie die Reste $-(CH_2)_2-SiMe_2Cl$, $-(CH_2)_3SiMe_2Cl$, $-(CH_2)_2-SiCl_3$, $-(CH_2)_2-SiMeCl_2$, $-(CH_2)_2-Si(OMe)_3$, $-CH(CH_3)-Si(OMe)_3$; $-(CH_2)_3-Si(OMe)_3$, $-CH_2-CH(CH_3)-Si(OMe)_3$; $-(CH_2)_2-Si(OEt)_3$, $-(CH_2)_3-Si(OEt)_3$, $-(CH_2)_6-Si(OMe)_3$, $-(CH_2)_6-Si(OEt)_3$, $-(CH_2)_2-(SiMe_2O)_{15}-SiMe_3$, $-(CH_2)_3-(OCH_2CH_2)_4-(CH_2)_3-Si(OEt)_3$; $-(CH_2)_2-Si(OMe)_2Me$, $-(CH_2)_3-Si(OMe)_2Me$, $-(CH_2)_2-Si(OEt)_2Me$, $-(CH_2)_3-Si(OEt)_2Me$, $-(CH_2)_6-Si(OMe)_2Me$, $-(CH_2)_6-Si(OEt)_2Me$ und $-(CH_2)_2-(OSiMe_2)_4-OSi(OEt)_2-H$ und

$C_3$- bis $C_{20}$-Halogenalkylreste, wie die Reste $-(CH_2)_3-Cl$, $-(CH_2)_6-Cl$, $-(CH_2)_2-CF_3$, $-(CH_2)_2-C_6F_{13}$.

Beispiele für Substituenten am zweiwertigen $C_2$- bis $C_{15}$-Kohlenwasserstoffrest sind Cyanogruppen, Halogenatome, wie Fluor, Chlor und Brom und $C_1$- bis $C_{10}$-Alkoxyreste, wie der Methoxyrest.

Im erfindungsgemäßen Organopolysiloxan bedeutet **a** vorzugsweise eine ganze Zahl mit einem Wert, der größer oder gleich der 0,0001-fachen und kleiner oder gleich der 0,66-fachen Summe von a+b+c+d+e ist. **b** hat vorzugsweise einen Wert von höchstens 7, insbesondere 0 oder 1. **c** hat vorzugsweise einen Wert von 0 bis 10000, insbesondere von 1 bis 100. **d** und **e** haben unabhängig voneinander vorzugsweise einen Wert von 0 bis 20, besonders bevorzugt von 0 bis 10 und insbesondere 0.

Beispiele für Organopolysiloxane der Formel 1, in der X = H bedeutet, sind:

$[Ph-Si(OSiMe_2-H)_2O_{1/2}][SiMe_2O][SiMe_3O_{1/2}]$,
$[Ph-Si(OSiMe_2-H)_2O_{1/2}]_2[SiMe_2O]_{35}$,
$[Ph-Si(OSiMe_2-H)_2O_{1/2}]_2[SiMe_2O]_{221}$,
$[Ph-Si(OSiMe_2-H)_2O_{1/2}]_3[SiMe_2O]_{64}[SiMeO_{3/2}]$,
$[Ph-Si(OSiMe_2-H)_2O_{1/2}]_{1,5}[SiMe_2O]_{54}[SiMeO_{3/2}]_2[Me_3SiO_{1/2}]_2$,
$[Ph-Si(OSiMe_2-H)_2O_{1/2}]_4[SiMe_2O]_{56}[SiO_{4/2}]$,
$[Ph-Si(OSiMe_2-H)_2O_{1/2}]_6[SiMe_2O]_{87}[SiO_{4/2}]_2$,
$[Ph-Si(OSiMe_2-H)_2O_{1/2}][SiMe_2O]_{17}[Me_3SiO_{1/2}]$,
$[Ph-Si(OSiMe_2-H)_2O_{1/2}][SiMe_2O]_{27}[CF_3C_2H_4Me_2SiO_{1/2}]$,
$[Ph-Si(OSiMe_2-H)_2O_{1/2}][SiMe_2O]_{105}[Me_3SiO_{1/2}]$,
$[Ph-Si(OSiMe_2-H)_2O_{1/2}]_2[SiMe_2O]_2[SiMe(CH_2CH_2CF_3)O]_{19}$,
$[Ph-Si(OSiMe_2-H)_2O_{1/2}]_2[SiMe_2O]_{55}[SiMePhO]_{18}$,
$[Ph-Si(OSiMe_2-H)_2O_{1/2}]_2[SiMe_2O]_{144}[SiPh_2O]_{28}$,

$[H_3C-CH(Ph)-CH_2-Si(OSiMe_2-H)_2O_{1/2}]_2[SiMe_2O]_{35}$,
$[H_3C-CH(Ph)-CH_2-Si(OSiMe_2-H)_2O_{1/2}]_2[SiMe_2O]_{65}$,
$[H_3C-CH(Ph)-CH_2-Si(OSiMe_2-H)_2O_{1/2}]_2[SiMe_2O]_{105}$,
$[H_3C-CH(Ph)-CH_2-Si(OSiMe_2-H)_2O_{1/2}]_2[SiMe_2O]_{222}$,
$[H_3C-CH(Ph)-CH_2-Si(OSiMe_2-H)_2O_{1/2}][SiMe_2O]_{15}[Me_3SiO_{1/2}]$,
$[H_3C-CH(Ph)-CH_2-Si(OSiMe_2-H)_2O_{1/2}]_3[SiMe_2O]_{64}[SiPhO_{3/2}]$.

Bevorzugte Beispiele für Organopolysiloxane der allgemeinen Formel 1 sind:

$$[H_3C-CH(Ph)-CH_2-Si(OSiMe_2-X)_2O_{1/2}]_2[SiMe_2O]_{35}$$

mit -X=     -H,
            $-CH_2CH_2-Si(OMe)_3$,
            $-(CH_2)_3O(CH_2CH_2O)_5Me$,
            $-(CH_2)_3OCH_2-CHOCH_2$,
            55 % $-CH_2CH_2-Si(OMe)_3$, 45 % -H,
            $-(CH_2)_3-$(Bernsteinsäureanhydrid),
            $-(CH_2)_{10}COOSiMe_3$ oder
            $-O-C(OSiMe_3)=CH(CH_3)$,

$$[Ph-Si(OSiMe_2-X)_2O_{1/2}][SiMe_2O]_{17}[Me_3SiO_{1/2}]$$

mit -X=     -H,
            $-CH_2CH_2CH_2-O-CH_2-CH(O)CH_2$,
            $-(CH_2)_2Si(OEt)_3$,

-O-C(OMe)=CH(CH$_3$),
-O-C(OSiMe$_3$)=CH(CH$_3$),
-CH$_2$CH$_2$-(SiMe$_2$O)$_4$-Si(OEt)$_2$H,
-CH$_2$-CH$_2$-COOEt,
-CH$_2$-CH$_2$-COOSiMe$_3$,
-CH$_2$CH$_2$-SiMe$_2$-NH-SiMe$_2$CH=CH$_2$,
-(CH$_2$)$_3$-(N-Phthalimido),
-CH$_2$CH$_2$-SiMe$_2$-O-SiMe$_2$CH=CH$_2$,
-CH$_2$CH$_2$-SiMe$_2$CH=CH$_2$ oder
-CH$_2$CH$_2$CH$_2$CH$_2$CH=CH$_2$,

$$[Ph\text{-}Si(OSiMe_2\text{-}X)_2O_{1/2}]_{2,8}[SiMe_2O]_{48}[MeSiO_{3/2}]$$

mit -X=   -H,
-CH$_2$-CH$_2$-O-CH$_2$-CH(O)CH$_2$,
-(CH$_2$CH$_2$)Si(OMe)$_3$,
-(Cyclohex-4-enyl)-ethyl-,
- (CH$_2$CH$_2$)SiMe$_2$CH=CH$_2$,
-(CH$_2$)$_3$O(CH$_2$CH$_2$O)$_{3,4}$Me,
- (CH$_2$)$_{10}$COOSiMe$_3$,
-(CH$_2$)$_2$SiMe$_2$Cl oder
-(CH$_2$CH$_2$)SiMe$_2$NHSiMe$_2$CH=CH$_2$,

$$[Ph\text{-}Si(OSiMe_2\text{-}X)_2O_{1/2}]_2[SiMe_2O]_{76}[MeSi\{(CH_2)_3\text{-}O(CH_2CH_2O)_{3,4}\text{-}Me\}O]_{11}$$

-mit -X=   -H
-CH$_2$-CH$_2$-SiMe$_2$-CH=CH$_2$,
-(CH$_2$)$_3$-OOC-C(CH$_3$)=CH$_2$,
- (CH$_2$)$_3$-OH,
-(CH$_2$)$_3$-O-CH$_2$CH$_2$-OH,
-(CH$_2$)$_3$-O-CH$_2$CH$_2$-OSiMe$_3$ oder
-(CH$_2$)$_3$O(CH$_2$CH$_2$O)$_{3,4}$Me,

$$[H_3C\text{-}CH(Ph)\text{-}CH_2\text{-}Si(OSiMe_2\text{-}X)_2O_{1/2}]_2[SiMe_2O]_2[SiMe(CH_2CH_2CF_3)O]_{19}$$

mit -X=   -H

$$[Ph\text{-}(CH_2)_2\text{-}Si(OSiMe_2\text{-}X)_2O_{1/2}]_{3,9}[SiMe_2O]_{219}[SiMePhO]_{28}\text{-}[SiO_{4/2}]$$

mit -X=   -H,
-CH$_2$CH$_2$-Si(OMe)$_3$ oder
-CH$_2$CH$_2$-Si(OOCCH$_3$)$_3$.

In den vorstehenden Formeln bedeuten Me eine Methylgruppe, Et eine Ethylgruppe und Ph eine Phenylgruppe. Die Dezimalzahlen bedeuten Durchschnittswerte.

Die erfindungsgemäßen Organopolysiloxane der allgemeinen Formel 1, in der **X** ein Wasserstoffatom bedeutet, können dadurch hergestellt werden, daß ein Organopolysiloxan der allgemeinen Formel 2,

$$[HO_{1/2}]_a[R_3SiO_{1/2}]_b[R_2SiO]_c[RSiO_{3/2}]_d[SiO_2]_e \tag{2},$$

mit mindestens einem Mol-Äquivalent eines Siloxans der allgemeinen Formel 3,

$$(HSiR^2{}_2O)_3SiR^1 \qquad\qquad (3),$$

pro Mol Hydroxylgruppen in Gegenwart katalytischer Mengen an Hydrosilylierungskatalysator unter Freisetzung von Wasserstoff umgesetzt wird,

wobei **R, R¹, R², a, b, c, d** und **e** die vorstehenden Bedeutungen aufweisen.

Die Reaktion von Hydroxyl-Verbindungen A-OH mit Si-H-Funktionen in Gegenwart von Katalysatoren der 8. Nebengruppe unter Abspaltung von Wasserstoff und Verknüpfung unter Bildung einer Si-O-A-Einheit ist aus E. Lukevics, M.Dzintara, J.Organomet.Chem. 295 (1985), S. 265-315, bekannt. Bei Siloxanen mit mehreren Si-H-Gruppen ist es jedoch prinzipiell schwierig, nur eine Si-H-Funktion in der gewünschten Weise zur Reaktion zu bringen, und man ist deshalb gezwungen, einen großen stöchiometrischen Überschuß dieser Komponente einzusetzen. Mit den Siloxanen der allgemeinen Formel 3 verläuft die Reaktion mit der Si-OH-Endgruppe von Polysiloxanen mit der angestrebten Selektivität auch ohne wesentlichen Überschuß dieses Siloxans. Die Siloxane der allgemeinen Formel 3 sind in hohen Ausbeuten und hoher Reinheit zugänglich.

Lediglich zur Absicherung einer vollständigen Umsetzung kann es von Vorteil sein einen stöchiometrischen Überschuß des Siloxans der allgemeinen Formel 3 gegenüber den Hydroxylgruppen des Organopolysiloxans der allgemeinen Formel 2 einzusetzen. Die Molverhältnisse Siloxan der allgemeinen Formel 3 zu den Hydroxylgruppen des Organopolysiloxans der allgemeinen Formel 2 betragen 1 bis 10, vorzugsweise 1 bis 3, insbesondere 1,05 bis 2,0.

Die Organopolysiloxane der allgemeinen Formel 2 können nach an sich bekannten Verfahren durch Silan-Hydrolyse oder durch (Poly)Siloxanäquilibrierung mit Silanen in Gegenwart von Äquilibrierkatalysatoren, z.B. Phosphornitridchloriden, und anschließende Hydrolyse hergestellt werden.

Die zur Herstellung der erfindungsgemäßen Diorganopolysiloxane der allgemeinen Formel 1 mit a,b=1, c>3, d, e=0 eingesetzten α-Hydroxyorganopolysiloxane der allgemeinen Formel 2 sind nach an sich bekannten Verfahren durch Ringöffnungspolymerisation von Hexaorganocyclotrisiloxanen zugänglich. Je nach Qualität der Monofunktionalität, wobei die Nebenbestandteile Di-OH-endständiges Öl und beidseitig endgestoppertes Öl auftreten, können prinzipiell geringe Anteile von doppelt $(X-SiR^2{}_2O)_2-SiR^1$-O-endgestopperten Ölen und beidseitig $R_3Si$-endgestopperten Polysiloxanen in den Endprodukten vorhanden sein. Diese Tatsache berührt aber nicht den Inhalt der Erfindung.

Beispiele für Organopolysiloxane bzw. Silanole der allgemeinen Formel 2 sind:

$HO-Si(Ph)_2-OH$, $PhSi(OSiMe_2OH)_3$, $Me_3SiOH$, $Ph-SiMe_2-OH$, $F_3C-CH_2CH_2-SiMe_2-OH$, $Si(OSiMe_2OH)_4$, $F_3C-CH_2CH_2-(SiMe_2O)_4-H$, $HO-SiMe_2-CH_2-CH_2-SiMe_2-OH$.

$H-(OSiMe_2)_2-OH$, $H-(OSiMe_2)_{13}-OH$, $H-(OSiMe_2)_{35}-OH$, $H-(OSiMe_2)_{105}-OH$, $H-(OSiMe_2)_{220}-OH$, $H-(OSiMe_2)_{640}-OH$, $H-(OSiMe_2)_{960}-OH$, $H-(OSiMe(CH_2CH_2CF_3))_4-OH$, $H-(OSiMe(CH_2CH_2CF_3))_{56}-OH$, $H-(OSiMe(CH_2CH_2CF_3))_{19}-OH$.

$Me_3Si-(OSiMe_2)_3-OH$, $Me_3Si-(OSiMe_2)_{15}-OH$, $Me_3Si-(OSiMe_2)_{44}-OH$, $nBuMe_2Si-(OSiMe_2)_{101}-OH$, $Me_3Si-(OSiMe_2)_{320}-OH$, $Me_3Si-(OSiMe_2)_{546}-OH$, $Me_3Si-(OSiMe_2)_{988}-OH$, $F_3C-CH_2CH_2-(SiMe_2O)_{14}-H$, $PhMe_2Si-(OSiMe_2)_{22}-OH$, $PhMe_2Si-(OSiMePh)_{12}-OH$, $nBuMe_2Si-(OSi(Ph)_2)_{32}-OH$.

$[HO-SiMe_2O_{1/2}]_4[SiMe_2O]_{26}[SiO_{4/2}]$, $[HO-SiMe_2O_{1/2}]_{3,8}[SiMe_2O]_{78}[SiO_{4/2}]_{1,5}$, $[HO-SiMe_2O_{1/2}]_{2,7}[SiMe_2O]_{44}[MeSiO_{3/2}]_{1,8}$, $[HO-SiMe_2O_{1/2}]_{2,8}[SiMe_2O]_{288}[PhSiO_{3/2}]$.

Die erfindungsgemäßen Organopolysiloxane der allgemeinen Formel 1, in der **X** eine über einen zweiwertigen, gegebenenfalls substituierten $C_2$- bis $C_{15}$-Kohlenwasserstoffrest gebundene, organische oder siliciumorganische Gruppe bedeutet, können in einem zweiten Schritt dadurch hergestellt werden, daß ein im ersten Schritt hergestelltes Organopolysiloxan der allgemeinen Formel 1, in der **X** ein Wasserstoffatom bedeutet, in Gegenwart katalytischer Mengen an Hydrosilylierungskatalysator mit mindestens einem Mol-Äquivalent einer Verbindung umgesetzt wird, die aus einer organischen oder siliciumorganischen Gruppe besteht, welche an einen aliphatisch ungesättigten, gegebenenfalls substituierten $C_2$- bis $C_{15}$-Kohlenwasserstoffrest gebunden ist.

Der aliphatisch ungesättigte Kohlenwasserstoffrest enthält mindestens eine Kohlenstoff-Kohlenstoff Doppel- oder Dreifachbindung.

Beispiele für aliphatisch ungesättigte Kohlenwasserstoffereste sind Alkenyl- oder Arylreste wie der Hexenylrest und Phenylenreste, wobei der Vinyl- und der Allylrest besonders bevorzugt sind.

In den ungesättigten Kohlenwasserstoffresten können auch eine oder mehrere Methyleneinheiten des Kohlenwasserstofferests durch beidseitig an Kohlenstoffatome gebundene Sauerstoffatome ersetzt sein. Beispiele für solche Reste sind $H_2C=CH-CH_2O-[CH_2CH_2O]_6-$ und $H_2C=CH-CH_2-O-C_6H_4(P)-$.

Ungesättigte Verbindungen, die im zweiten Schritt als Reaktionspartner von Organopolysiloxanen der allgemeinen Formel 1 mit X=H eingesetzt werden, sind entweder käuflich oder nach bekannten Vorschriften aus käuflichen Produkten herstellbar.

Beispiele für aliphatisch ungesättigte Verbindungen sind:

1,3-Butadien, Isopren, 1,5-Hexadien, Styrol, 1,4-Divinylbenzol, 1,4-Diallylbenzol, 4-Allyloxyphenol (oder der entsprechende Trimethylsilylether), 5-Vinyl-2-norbornen, 4-Vinyl-1-cyclohexen, Limonen, Allylamin, N-Allylcyclohexylamin, Allyldimethylamin, Allylalkohol, 2-Allyloxyethanol, Allyloxytrimethylsilan, Allylchlorid, Allylbromid, Acroleindime-thylacetal, Allyacetat, Acroleindiethylacetal, $H_2C=CH-CH_2-CH(O-CH_2CH_2-O)$, Allylvinylether, Diallylether, Allylpoly-glykolether, Allyl-O-$(CH_2CH_2O)_5$Me, Allyl-O-$(CH_2CH(CH_3)O)_{12}$Me, Allyl-2,3-epoxypropylether, 2,3-Epoxypropylmethacrylat, 2-Allyloxyethoxytrimethylsilan, 2-Allyloxy-3-butin, Diallylether von 2-Butin-1,4-diol, Diallylether von 3-Hexin-2,5-diol, (Allylamino)trimethylsilan, $H_2C=CH-CH_2(N$-Phthalimido$)$, $H_2C=CH-[CH_2-(N$-Phthalimido$)]_2$, Dimethyldivinyl-silan, Vinyltrimethoxysilan, Vinyldimethylchlorsilan, Vinyltrichlorsilan, Vinyltriacetoxysilan, Allyltrimethoxysilan, Vinyltriethoxysilan, Allyltriethoxysilan, Vi$(SiMe_2O)_4$-Si$(OEt)_2$-H (Herstellung nach PCT WO92/19667), 1,3-Divinyl-1,1,3,3-tetramethyldisilazan, 1-Vinyl-1,1,3,3,3-pentamethyldisilazan, 1,3-Divinyl-1,1,3,3-tetramethyldisiloxan, 1-Vinyl-1,1,3,3,3-pentamethyldisiloxan, Allylbernsteinsäureanhydrid, 10-Undecencarbonsäuretrimethylsilylester, 10-Undecencarbonsäuremethylester, 10-Undecen-1-ol,(10-Undecenyloxy)trimethylsilan, Methacrylsäureallylester, 2-Propinoxyethyl-acrylat, Bismethacrylat von 2-Butin-1,4-diol, 2-Butindiol-bis(ethoxylat), 2-Propinoxyethanol, 3-Butin-1-ol, 2-Propin-1-ol, 1,1-Dimethyl-3-butin-1-ol, 2,2-Dimethyl-3-butin-1-ol, 2-Methyl-3-butin-1-ol, 1-Methyl-3-butin-1-ol, Acrylsäuretrimethylsilylester.

Die erfindungsgemäßen Organopolysiloxane der allgemeinen Formel 1, in der **X** ein Wasserstoffatom bedeutet, können isoliert werden oder im Anschluß an ihre Herstellung in einem zweiten Schritt ohne Abtrennung des Hydrosilylierungskatalysators mit der aliphatisch ungesättigten Verbindung umgesetzt werden zu Organopolysiloxanen der allgemeinen Formel 1, in der **X** ungleich H ist, d.h. eine über einen zweiwertigen, gegebenenfalls substituierten $C_2$- bis $C_{15}$-Kohlenwasserstoffrest gebundene organische oder siliciumorganische Gruppe bedeutet.

Durch Einsatz definierter Mengen an ungesättigter Verbindung läßt sich der gewünschte Umsetzungsgrad erreichen, was auch bedeutet, daß ein unvollständiger Umsetzungsgrad durchaus erwünscht sein kann, wenn beispielsweise eine Folgereaktion wie die Einvernetzung über verbleibende Si-H-Funktionen erfolgen soll. Der Anteil von X=H-Endgruppen beträgt nach der Hydrosilylierungsreaktion des zweiten Schritts üblicherweise 0 - 90 Mol-%, vorzugsweise 0 - 50 Mol-%, insbesondere 0 Mol-%. Die Menge des im ersten Schritt eingesetzten Katalysators kann vorteilhafterweise in diesem Fall so bemessen sein, daß sie den zweiten Schritt noch in erwünschter Weise beschleunigt.

Für die Herstellung der erfindungsgemäßen Organopolysiloxane, bei denen X=H bedeutet, sowie für deren Umsetzung mit aliphatisch ungesättigten Verbindungen im zweiten Schritt können alle Katalysatoren eingesetzt werden, die auch bisher zur Reaktion von Si-H-Funktionen mit Alkenen und/oder Alkinen eingesetzt wurden. Geeignet sind Platinmetalle und/oder deren Verbindungen, vorzugsweise Platin und/oder dessen Verbindungen. Beispiele für solche Katalysatoren sind metallisches und feinverteiltes Platin, das sich auf Trägern, wie Siliciumdioxid, Aluminiumoxid oder Aktivkohle befinden kann, Platinkolloide, Verbindungen oder Komplexe von Platin, wie Platinhalogenide, z.B. $PtCl_4$, $H_2PtCl_6$*$6H_2O$, $Na_2PtCl_4$*$4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6$*$6H_2O$ und Cyclohexanon, Platin-Vinylsiloxan-Komplexe, insbesondere Platin-Divinyltetramethyldisiloxankomplexe mit oder ohne Gehalt an nachweisbarem, anorganisch gebundenen Halogen, Bis-(gamma-picolin)-platindichlorid, Trimethylendipyridinplatindichlorid sowie Dimethylsulfoxidethylen-platin-(II)-dichlorid oder Rhodiummetall, kolloidal verteilt oder auf Trägermaterialien aufgebracht, oder Rhodium-Verbindungen wie RhClCO$(PPh_3)_2$, $RhCl_3$*$4H_2O$, $[Rh(CO)_2Cl]_2$, $Rh(CO)_2(acac)$, $RhCl(PPh_3)_3$.

Die für eine vollständige Umsetzung erforderliche Katalysatorkonzentration richtet sich nach der Aktivität des jeweiligen Katalysator-Systems sowie nach der Art der Umsetzung in Schritt 1 und 2 sowie nach den jeweiligen Reaktanden und muß im Einzelfall ermittelt werden. Sie übersteigt aber vorzugsweise nicht 5 Gew.-% bezogen auf die Reaktionsmischung, beispielsweise bei heterogenen, auf Trägern fixierten Katalysatoren, und kann im Falle sehr aktiver Systeme wie dem Platin-Sym-Divinyltetrasiloxan-Komplex auf 500 bis 0,5 Gewichts-ppm Katalysatormetall, bezogen auf das Gewicht der Gesamtmischung, reduziert werden. Üblicherweise liegt die Konzentration des Katalysators sowohl für den ersten Reaktionsschritt als auch für den zweiten Reaktionsschritt zwischen 0,5 und 150 ppm, vorzugsweise zwischen 1 und 100 ppm, besonders bevorzugt zwischen 5 und 70 ppm. Darüber hinaus können für den ersten und den zweiten Reaktionsschritt unterschiedliche Katalysatoren in unterschiedlichen Konzentrationen eingesetzt werden.

Die Umsetzungen zwischen dem Siloxan der allgemeinen Formel 3 und dem hydroxylfunktionellen Polysiloxan der allgemeinen Formel 2 oder der zweite Reaktionsschritt des Organopolysiloxans der allgemeinen Formel 1 mit X=H können durch Mischen der beteiligten Komponenten mit dem jeweiligen Katalysator in einer dafür geeigneten Apparatur, z.B. einem Rührwerk, durchgeführt werden. Da bei der Herstellung von Organopolysiloxanen der allgemeinen Formel 1 mit X=H gasförmiger Wasserstoff gebildet wird, empfiehlt sich, insbesondere bei Arbeit mit größeren Mengen, die Überlagerung der Reaktionsmischung mit einem Schutzgas wie Argon oder Stickstoff.

Um unerwünscht heftige Reaktionen zu vermeiden, kann es vorteilhaft sein, eine Komponente vorzulegen und die andere Komponente kontrolliert zuzudosieren, wobei der benötigte Katalysator entweder extra zudosiert oder im Gemisch mit der vorgelegten und/oder zulaufenden Komponente in die Reaktionsmischung eingebracht werden kann. Vorzugsweise wird bei der Herstellung des Polysiloxans der allgemeinen Formel 1 mit X=H ein Gemisch aus Siloxan

EP 0 646 616 B1

der allgemeinen Formel 3 und Katalysator vorgelegt und das OH-funktionelle Organopolysiloxan der allgemeinen Formel 2 zudosiert. Bei der Herstellung von Organopolysiloxanen der allgemeinen Formel 1, in der X ungleich H ist, wird vorzugsweise Organopolysiloxan der allgemeinen Formel 1, in der X=H ist, im Gemisch mit dem Katalysator vorgelegt und der Reaktionspartner zudosiert. Besonders bevorzugt ist die Herstellung der erfindungsgemäßen Organopolysiloxane der allgemeinen Formel 1, in der X ungleich H ist, direkt im Anschluß an die Herstellung des Organopolysiloxans der allgemeinen Formel 1, in der X=H ist, im selben Reaktionsgefäß, wobei der für den zweiten Schritt (Si-H-Addition) benötigte Katalysator in Art und Menge bereits aus dem ersten Schritt ausreichend vorhanden ist und der Reaktionspartner zudosiert wird. Im Falle bifunktioneller Reaktionspartner, wie Dimethyldivinylsilan oder Allylmethacrylat, ist es vorteilhaft, einen stöchiometrischen Überschuß der bifunktionellen Verbindung vorzulegen und Organopolysiloxan der allgemeinen Formel 1, in der X=H ist, inklusive Katalysator oder mit zusätzlichem Katalysator zuzudosieren.

Die Umsetzung zu Organopolysiloxanen der allgemeinen Formel 1 kann entweder diskontinuierlich in einem Rührwerk oder aber kontinuierlich, z.B. in einem Schleifenreaktor, unter dem Druck der umgebenden Atmosphäre oder erhöhtem Druck bis $10^5$ hPa oder erniedrigtem Druck bis $10^{-6}$ hPa und einer Temperatur von 0 - 200°C, vorzugsweise bei einem Druck von 900 bis 1100 hPa und einer Temperatur von 20 bis 180°C, durchgeführt werden. Besonders bevorzugt ist die Verfahrensweise, bei der die Herstellung des erfindungsgemäßen Organopolysiloxans der allgemeinen Formel 1, in der X=H ist, bei dem Druck der umgebenden Atmosphäre und einer niedrigeren Temperatur, vorzugsweise 20 - 100°C, besonders bevorzugt 20 - 70°C, erfolgt als die Folgereaktion mit der ungesättigten Verbindung zu dem Organopolysiloxan der allgemeinen Formel 1, mit X ungleich H, vorzugsweise bei einer Temperatur von 50 - 180°C, besonders bevorzugt 70 - 120°C. Falls erforderlich, werden leichtflüchtige Komponenten der Reaktionsmischung, beispielsweise Überschuß des Siloxans der allgemeinen Formel 3 oder Lösungsmittel im ersten Schritt oder Überschuß der ungesättigte Reste tragenden Verbindung im zweiten Schritt, durch Destillation, vorzugsweise bei einem Druck von $10^{-6}$ bis $8*10^2$ hPa, nach beendeter Umsetzung entfernt. Das Ende bzw. der Grad der Umsetzung des ersten oder zweiten Schritts kann jeweils mittels NMR- oder IR-Spektroskopie oder durch eine Titration ermittelt werden.

Die Verwendung von Lösungsmitteln ist bei der Umsetzung zu dem Organopolysiloxan der allgemeinen Formel 1 nicht notwendig, kann aber gegebenenfalls Vorteile mit sich bringen, z. B. zur Verdünnung, wenn die Viskosität der Reaktionsmischung sehr hoch ist oder eine besondere Stabilisierung der OH-Funktionen, z.B. gegen Kondensation, erwünscht ist. Alle Lösungsmittel oder Lösungsmittelgemische, die aufgrund ihrer chemischen Struktur nicht zu unerwünschten Nebenreaktionen führen können, die die Katalysatoraktivität nicht beeinträchtigen und die einen Siedepunkt bzw. Siedebereich von bis zu 120°C bei 0,1 hPa besitzen, sind für das erfindungsgemäße Verfahren bevorzugt. Beispiele für solche Lösungsmittel sind aliphatische Kohlenwasserstoffe wie Pentan, Hexan, Heptan, Octan, Cyclohexan, Methylcyclohexan, Hexahydronaphthalin, Dekalin oder Gemische verschiedener Kohlenwasserstoffe wie Petrolether oder Alkangemisch-Fraktionen aus der Erdöldestillation; aromatische Kohlenwasserstoffe wie Benzol, Toluol, m-Xylol, o-Xylol, p-Xylol oder Gemische davon; halogenierte Kohlenwasserstoffe wie Dichlormethan, Trichlormethan, Tetrachlormethan, Perchlorethylen, 1,2,3-Trichlorpropan, Chlorbenzol; Ether, wie Diethylether, Methyl-t-butylether, THF, Dimethoxyethan, Diethylenglykoldimethylether, Diethylenglykoldibutylether, Di-n-butylether, 1,4-Dioxan oder Gemische dieser Lösungsmittel.

Die Bezeichnung Lösungsmittel bedeutet nicht, daß sich alle Reaktionskomponenten in diesem lösen müssen. Die Reaktion kann auch in einer Suspension oder Emulsion eines oder mehrerer Reaktionspartner durchgeführt werden. Die Reaktion kann auch in einem Lösungsmittelgemisch mit einer Mischungslücke ausgeführt werden, wobei in jeder der Mischphasen jeweils mindestens ein Reaktionspartner löslich ist.

Zur Verhinderung unerwünschter Nebenreaktionen kann es vorteilhaft sein, die Ausgangsmaterialien mit Hilfe geeigneter Methoden von hydroxylhaltigen Nebenbestandteilen, wie Wasser oder Alkoholen, zu befreien. Dies kann z.B. geschehen durch azeotrope Trocknung, Vorbehandlung mit Molsieben, Montmorrilloniten oder Silica-Gel oder anderen Absorbern wie Calciumchlorid, Natriumsulfat oder Magnesiumsulfat, oder Umsetzung mit Silazanen, Silylamiden, z.B. Bis-(trimethylsilyl)acetamid und/oder Chlorsilanen oder 2,3-Dihydro-4-H-pyran, die auch bei Einsatz eines stöchiometrischen Überschusses problemlos aus dem Endprodukt entfernt werden können. Letztere Methode kann z.B. verwendet werden, um in ungesättigten Verbindungen mit protischen Funktionen, wie Allylalkohol, diese durch Schutzgruppen reversibel zu blockieren und damit ebenfalls Nebenreaktionen der protischen Funktion zu vermeiden. Nach beendeter Umsetzung kann die Silyl-Schutzgruppe z.B. durch Einwirken wässriger oder alkoholischer Kaliumoder Tetrabutylammoniumfluoridlösung oder mit Methanol in Gegenwart saurer (heterogener) Katalysatoren wieder abgespalten werden.

Falls erwünscht, können nach beendeter Umsetzung die eingesetzten Katalysatoren mit Hilfe geeigneter, teilweise kommerziell erhältlicher Absorber, z.B. Aktivkohle, Ionenaustauscher, Zeolithe, Metallpulver, Bentonite, aus dem Produkt entfernt werden.

Die erfindungsgemäßen Organopolysiloxane der Formel 1 können je nach Funktion X Anwendung finden als Vernetzer für RTV-Additionskautschuk-Systeme(X=H), RTV-Kondensationskautschuk-Systeme (X z.B. $-CH_2CH_2$-Si$(OCH_3)_3$), als Beschichtungsmaterialien zur Hydrophobierung oder Hydrophilierung der Oberflächen von Materialien wie Beton, Holz, Metall, wie Stahl, Eisen, Kupfer, Textilgeweben, Vliesstoffen, Glas, Keramik, Kunststoffen, Papier, oder zur Verbesserung der Gleiteigenschaften an Grenzflächen, als Hydraulik-Flüssigkeiten, als Emulgatoren, als Comonomere bei der Modifizierung von Polysiloxanen oder der Copolymerisation mit anderen Monomeren zur Optimierung der Eigenschaften technischer Kunststoffe, als interne Weichmacher, Schlagzähmodifier für Kunststoffe, wie Polyepoxide, Polyester, Polycarbonate, Polyvinylverbindungen, Polyamide und Polyimide.

Beispiele

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt. Des weiteren beziehen sich alle Angaben von Teilen und Prozentsätzen, soweit nichts anderes angegeben ist, auf das Gewicht.

Des weiteren werden die folgenden Abkürzungen verwendet:

Me:   Methylrest
Et:   Ethylrest
Ph:   Phenylrest

**Beispiel 1**

Herstellung eines Organopolysiloxans der allgemeinen Formel 1 mit X=H

Zu einer Mischung aus 41,25 g (0,125 Mol) $(HSiMe_2O)_3SiPh$ und 1,13 g einer an Pt 1 %igen Lösung, von $[Pt[(H_2C{=}CHSiMe_2)_2O]_2]$ in n-Hexan entsprechend 66 ppm Pt, bezogen auf die Gesamtmischung, wurden 131 g (0,05 Mol; = 0,1 Mol OH) eines Polysiloxans der mittleren Formel $HO(SiMe_2O)_{34,5}H$ so zudosiert, daß die Innentemperatur 40°C nicht überstieg. Man ließ bei 70°C eine Stunde nachreagieren und zog anschließend am Rotationsverdampfer bei 120°C/1 hPa alle flüchtigen Bestandteile ab. Als Rückstand verblieben 164 g eines klaren, gelben Öls, das bei 25°C eine Viskosität von 43 mm$^2$/s besaß und dem nach $^{29}$Si-NMR- und $^1$H-NMR-Analytik folgende Formel zugeordnet werden konnte:

$$(HSiMe_2O)_2SiPhO\text{-}(SiMe_2O)_{36,5}\text{-}SiPh(OSiMe_2H)_2.$$

**Beispiel 2**

a) Herstellung von $(HSiMe_2O)_3SiCH_2CHPhCH_3$

Eine Mischung aus 116 g (0,87 Mol) 1,1,3,3-Tetramethyldisiloxan und 26 g (1,43 Mol) Wasser wurde bei 25°C tropfenweise mit 2-Phenylpropyltrichlorsilan (0,43 Mol) versetzt. Die nach Neutralisation mit NaHCO$_3$-Lösung und Trocknen der Produktphase mit Molekularsieb 4A der Firma Merck, Darmstadt, durchgeführte Destillation lieferte 99 g Zielprodukt (62 % d.Th.) mit einem Siedepunkt von 90°C/1 hPa. Die Charakterisierung erfolgte mittels $^1$H- und $^{29}$Si-NMR-Spektrum.

b) Herstellung eines Organopolysiloxans der allgemeinen Formel 1 mit X=H

Zu einer Mischung aus 43 g (0,115 Mol) $(HSiMe_2O)_3SiCH_2CHPhCH_3$ und 1 g einer an Pt 1 %igen Lösung, von $[Pt[(H_2C{=}CHSiMe_2)_2O]_2]$ in n-Hexan entsprechend 57,5 ppm Pt, bezogen auf die Gesamtmischung, wurden 131 g (0,05 Mol; = 0,1 Mol OH) eines Polysiloxans der mittleren Formel $HO(SiMe_2O)_{34,5}H$ so zudosiert, daß die Innentemperatur 30°C nicht überstieg. Man ließ bei 70°C eine Stunde nachreagieren und zog anschließend am Rotationsverdampfer bei 120°C/1 hPa alle flüchtigen Bestandteile ab. Als Rückstand verblieben 167 g eines klaren, gelben Öls, das bei 25°C eine Viskosität von 61 mm$^2$/s besaß und dem nach $^{29}$Si-NMR- und $^1$H-NMR-Analytik folgende Formel zugeordnet werden konnte:

$$(HSiMe_2O)_2Si(CH_2CHPhCH_3)O\text{-}(SiMe_2O)_{36,5}\text{-}$$

$$Si(CH_2CHPhCH_3)(OSiMe_2H)_2.$$

**Beispiel 3**

Herstellung eines Organopolysiloxans der allgemeinen Formel 1 mit X=H

Zu einer Mischung aus 29,5 g (0,09 Mol) $(HSiMe_2O)_3SiPh$ und 1,2 g einer an Pt 1 %igen Lösung, von $[Pt[(H_2C=CHSiMe_2)_2O]_2]$ in n-Hexan entsprechend 96 ppm Pt, bezogen auf die Gesamtmischung, wurden 94 g (0,078 Mol) eines Polysiloxans der mittleren Formel $Me_3SiO(SiMe_2O)_{15}H$ so zudosiert, daß die Innentemperatur 30°C nicht überstieg. Man ließ bei 30°C eine Stunde nachreagieren, zog anschließend am Rotationsverdampfer bei 100°C/1hPa alle flüchtigen Bestandteile ab und filtrierte über 2 g Bentonit als Filterhilfe. Als Rückstand verblieben 100 g eines klaren, gelben Öls, das bei 25°C eine Viskosität von 17 mm²/s besaß und dem nach $^{29}$Si-NMR-, $^1$H-NMR- und SFC (supercritical fluid chromatography)-Analytik folgende mittlere Formel zugeordnet werden konnte:

$$(HSiMe_2O)_2SiPhO\text{-}(SiMe_2O)_{16}\text{-}SiMe_3.$$

**Vergleichsbeispiel 4**

Einsatz eines Siloxans, das nicht unter die allgemeine Formel 3 fällt (Me anstatt $R^1$)

Zu einer Mischung aus 97 g (0,36 Mol) $(HSiMe_2O)_3SiMe$ und 3,2 g einer an Pt 1 %igen Lösung von $[Pt[(H_2C=CHSiMe_2)_2O]_2]$ in n-Hexan entsprechend 65 ppm Pt, bezogen auf die Gesamtmischung, wurden 230 g (0,19 Mol) eines Polysiloxans der mittleren Formel $Me_3SiO(SiMe_2O)_{15}H$ so zudosiert, daß die Innentemperatur 30°C nicht überstieg. Man ließ bei 30°C eine Stunde nachreagieren und zog anschließend am Rotationsverdampfer bei 100°C/ 1 hPa alle flüchtigen Bestandteile ab. Als Rückstand verblieben 257 g eines klaren, gelben Öls, das bei 25°C eine Viskosität von 15 mm²/s besaß und dem nach $^{29}$Si-NMR- und $^1$H-NMR-Analytik folgende Formel zugeordnet werden konnte:

$$[HSiMe_2O_{1/2}]_{1,9}[SiMeO_{3/2}]_{1,1}[SiMe_2O]_{15,4}[Me_3SiO_{1/2}]_{0,9}$$

Dabei sind 23 % aller $[SiMeO_{3/2}]$-Einheiten in die Kette eingebaut und sitzen nicht wie gewünscht am Kettenende.

**Beispiel 5**

Herstellung eines Organopolysiloxans der allgemeinen Formel 1 mit X=H

Zu einer Mischung aus 33 g (0,1 Mol) $(H\text{-}SiMe_2O)_3SiPh$ und 0,2 g einer an Pt 1 %igen Lösung von $[Pt[(H_2C=CHSiMe_2)_2O]_2]$ in n-Hexan entsprechend 48 ppm Pt, bezogen auf die Gesamtmischung, wurden 9 g (0,1 Mol) Trimethylsilanol, das zuvor destilliert und über Molekularsieb 4A aufbewahrt 4A aufbewahrt worden war, in ca. 30 Min. so zugetropft, daß eine Reaktionstemperatur von 60°C gehalten werden konnte. Anschließend wurde am Rotationsverdampfer bei 40°C/1 hPa eingeengt. Als Rückstand verblieben 38 g einer klaren Flüssigkeit, der nach $^{29}$Si-NMR- und $^1$H-NMR-Analytik folgende Formel zugeordnet wurde:

$$(HSiMe_2O)_2SiPh\text{-}O\text{-}SiMe_2\text{-}O\text{-}SiMe_3$$

**Beispiel 6**

Herstellung eines Organopolysiloxans der allgemeinen Formel 1 mit X=H

Zu einer Mischung aus 18,3 g (0,055 Mol) $(HSiMe_2O)_3SiPh$ und 0,34 g einer an Pt 1 %igen Lösung von $[Pt[(H_2C=CHSiMe_2)_2O]_2]$ in n-Hexan entsprechend 50 ppm Pt, bezogen auf die Gesamtmischung, wurden 50 g (0,014 Mol; = 0,055 Mol OH) eines Polysiloxans der mittleren Formel (nach $^1$H- und $^{29}$Si-NMR-Spektrum) $[HOSiMe_2O_{1/2}]_4$ $[SiMe_2O]_{43,4}[SiO_{4/2}]_{1,52}$ so zudosiert, daß die Innentemperatur 30°C nicht überstieg. Man ließ bei 50°C drei Stunden nachreagieren und zog anschließend am Rotationsverdampfer bei 100°C/1 hPa alle flüchtigen Bestandteile ab. Als Rückstand verblieben 61 g eines klaren, gelben Öls, das bei 25°C eine Viskosität von 49 mm²/s besaß und dem nach $^{29}$Si-NMR- und $^1$H-NMR-Analytik folgende Formel zugeordnet werden konnte:

$$[(HSiMe_2O)_2SiPhO_{1/2}]_4[SiMe_2O]_{51,4}[SiO_{4/2}]_{1,52}$$

### Beispiel 7

Umsetzung eines Organopolysiloxans der allgemeinen Formel 1 mit X=H mit Allylglycidether

27,8 g (0,018 Mol) des Produktes aus Beispiel 4 wurden bei 70°C mit 6,8 g (0,06 Mol) Allyl-2,3-epoxypropylether versetzt; die Temperatur stieg daraufhin auf 120°C an. Man ließ 30 Min. bei 100°C nachreagieren und destillierte anschließend im Ölpumpenvakuum alle flüchtigen Bestandteile ab. Als Rückstand verblieben 32 g eines braunen, klaren Öls, das nach $^1$H-NMR- und $^{29}$Si-NMR-Spektrum folgende Formel besaß:

$$(CH_2OCH\text{-}CH_2\text{-}O\text{-}(CH_2)_3\text{-}SiMe_2O)_2\text{-}SiPh\text{-}(OSiMe_2)_{16}\text{-}OSiMe_3$$

### Beispiel 8

Umsetzung eines Organopolysiloxans der allgemeinen Formel 1 mit X=H mit Vinyltrimethoxysilan

16 g (0,005 Mol) des Produktes aus Beispiel 1 wurden bei 80°C mit 3 g (0,02 Mol) Vinyltrimethoxysilan versetzt. Die Temperatur der Mischung stieg daraufhin auf 160°C an. Man ließ 2 Stunden bei 100°C nachreagieren. Als Rückstand verblieben 16 g eines braunen, klaren Öls, das nach $^1$H-NMR- und $^{29}$Si-NMR-Spektrum folgende Formel besaß:

$$[(MeO)_3Si\text{-}(CH_2)_2\text{-}SiMe_2O)_2SiPhO_{1/2}]_2[SiMe_2O]_{36,5}$$

### Beispiel 9

Umsetzung eines Organopolysiloxans der allgemeinen Formel 1 mit X=H mit Allylbernsteinsäureanhydrid

16 g (0,005 Mol) des Produktes aus Beispiel 1 wurden bei 80°C mit 2,8 g (0,02 Mol) Allylbernsteinsäureanhydrid versetzt. Man heizte die Mischung auf 110°C auf und ließ 2 Stunden bei 110°C nachreagieren. Als Rückstand verblieben 15 g eines braunen, klaren Öls, das nach $^1$H-NMR- und $^{29}$Si-NMR-Spektrum folgende Formel besaß:

$$[(O_3C_4H_3\text{-}(CH_2)_3\text{-}SiMe_2O)_2SiPhO_{1/2}]_2[SiMe_2O]_{36,5}$$

### Beispiel 10

Umsetzung eines Organopolysiloxans der allgemeinen Formel 1 mit X=H mit 4-Vinyl-1-cyclohexen

8,1 g (0,075 Mol) 4-Vinyl-1-cyclohexen (Merck) wurden bei 70°C mit 30 g (0,0094 Mol) des Produktes aus Beispiel 2 binnen 15 Min. versetzt. Man erhitzte 2 Stunden auf 120°C und zog anschließend bei 100°C/1 hPa alle flüchtigen Bestandteile ab. Als Rückstand verblieben 30 g eines klaren Öls, dem nach $^{29}$Si-NMR- und $^1$H-NMR-Analytik folgende mittlere Formel zugeordnet werden konnte:

$$[(Cyclohexenylethyl\text{-}SiMe_2O)_2Si(CH_2CHPhCH_3)\text{-}$$

$$O_{1/2}]_2\text{-}(SiMe_2O)_{36,5}$$

### Beispiel 11

Umsetzung eines Organopolysiloxans der allgemeinen Formel 1 mit X=H mit Trimethylsilylacrylat

8,64 g (0,06 Mol) Trimethylsilylacrylat wurden bei 70°C binnen 30 Minuten mit 32,2 g (0,01 Mol) des Produktes aus Beispiel 1 versetzt. Man ließ eine Stunde bei 100°C nachreagieren und zog flüchtige Bestandteile im Vakuum ab (100°C/1 hPa). Als Rückstand verblieben 34 g eines klaren Öls, das nach $^1$H-NMR- und $^{29}$Si-NMR-Spektrum folgende

mittlere Formel besaß:

$$[(H_3CHC=C\{OSiMe_3\}O\text{-}SiMe_2O)_2SiPhO_{1/2}]_2[SiMe_2O]_{36,5}$$

## Patentansprüche

1. organopolysiloxane der allgemeinen Formel 1,

$$[R^1Si(OSiR^2{}_2X)_2OSiR^2{}_2O_{1/2}]_a[R_3SiO_{1/2}]_b[R_2SiO]_c$$

$$[RSiO_{3/2}]_d[SiO_2]_e \tag{1},$$

worin

| | |
|---|---|
| **R** | gleiche oder verschiedene, gegebenenfalls substituierte $C_1$-bis $C_{18}$-Kohlenwasserstoffreste, |
| **R$^1$** | einen gegebenenfalls substituierten $C_6$- bis $C_{15}$-Kohlenwasserstoffrest, der mindestens einen Phenylring enthält, |
| **R$^2$** | einen $C_1$- bis $C_3$-Kohlenwasserstoffrest, |
| **X** | ein Wasserstoffatom oder eine über einen zweiwertigen, gegebenenfalls substituierten $C_6$- bis $C_{15}$-Kohlenwasserstoffrest gebundene organische oder siliciumorganische Gruppe, wobei eine oder mehrere Methyleneinheiten des Kohlenwasserstoffrests durch beidseitig an Kohlenstoffatome gebundene Sauerstoffatome ersetzt sein können, |
| **a** | eine ganze Zahl im Wert von mindestens 1 und |
| **b, c, d** und **e** | jeweils unabhängig voneinander den Wert von 0 oder eine positive ganze Zahl bedeuten, und die Summe von **a, b, c, d** und **e** mindestens 3 beträgt oder |

$$(HSiMe_2O)_2SiPh\text{-}O\text{-}SiMe_2\text{-}O\text{-}SiMe_3,$$

wobei Me Methyl und Ph Phenyl bedeutet.

2. Verfahren zur Herstellung der Organopolysiloxane der allgemeinen Formel 1 nach Anspruch 1, in der **X** ein Wasserstoffatom bedeutet, bei dem ein Organopolysiloxan der allgemeinen Formel 2,

$$[HO_{1/2}]_a[R_3SiO_{1/2}]_b[R_2SiO]_c[RSiO_{3/2}]_d[SiO_2]_e \tag{2},$$

mit mindestens einem Mol-Äquivalent eines Siloxans der allgemeinen Formel 3,

$$(HSiR^2{}_2O)_3SiR^1 \tag{3},$$

pro Mol Hydroxylgruppen in Gegenwart katalytischer Mengen an Hydrosilylierungskatalysator unter Freisetzung von Wasserstoff umgesetzt wird, wobei

**R, R$^1$, R$^2$, a, b, c, d** und **e**        die vorstehenden Bedeutungen aufweisen.

3. Verfahren zur Herstellung der Organopolysiloxane der allgemeinen Formel 1 nach Anspruch 1, in der **X** eine über einen zweiwertigen, gegebenenfalls substituierten $C_2$-bis $C_{15}$-Kohlenwasserstoffrest gebundene organische oder siliciumorganische Gruppe bedeutet, bei dem ein Organopolysiloxan der allgemeinen Formel 1, in der **X** ein Wasserstoffatom bedeutet, in Gegenwart katalytischer Mengen an Hydrosilylierungskatalysator mit einer Verbindung umgesetzt wird, die aus einer organischen oder siliciumorganischen Gruppe besteht, welche an einen aliphatisch ungesättigten, gegebenenfalls substituierten $C_2$- bis $C_{15}$-Kohlenwasserstoffrest gebunden ist.

**Claims**

1. Organopolysiloxane of the general formula 1

$$[R^1Si(OSiR^2{}_2X)_2OSiR^2{}_2O_{1/2}]_a[R_3SiO_{1/2}]_b[R_2SiO]_c$$

$$[RSiO_{3/2}]_d[SiO_2]_e \tag{1},$$

where

| | |
|---|---|
| **R** | are identical or different, substituted or unsubstituted, $C_1$- to $C_{18}$-hydrocarbon radicals, |
| **R¹** | is a substituted or unsubstituted $C_6$- to $C_{15}$-hydrocarbon radical comprising at least one phenyl ring, |
| **R²** | is a $C_1$- to $C_3$-hydrocarbon radical, |
| **X** | is a hydrogen atom or an organic or organosilicon group bonded via a divalent, substituted or unsubstituted, $C_2$- to $C_{15}$-hydrocarbon radical, with one or more methylene units of the hydrocarbon radical being able to be replaced by oxygen atoms bonded on both sides to carbon atoms, |
| **a** | is an integer of at least 1 and |
| **b, c, d** and **e** | are each, independently of one another, 0 or a positive integer, and the sum of **a, b, c, d** and **e** is at least 3, or |

$$(HSiMe_2O)_2\text{-}SiPh\text{-}O\text{-}SiMe_2\text{-}O\text{-}SiMe_3$$

where Me is methyl and Ph is phenyl.

2. Process for preparing the organopolysiloxane of the general formula 1 according to claim 1 and in which **X** is a hydrogen atom, which comprises reacting an organopolysiloxane of the general formula 2,

$$[HO_{1/2}]_a[R_3SiO_{1/2}]_b[R_2SiO]_c[RSiO_{3/2}]_d[SiO_2]_e \tag{2},$$

with at least one molar equivalent of a siloxane of the general formula 3,

$$(HSiR^2{}_2O)_3SiR^1 \tag{3},$$

per mol of hydroxyl groups in the presence of catalytic amounts of hydrosilylation catalyst with liberation of hydrogen,
where
**R, R¹, R², a, b, c, d** and **e** are as specified above.

3. Process for preparing the organopolysiloxane of the general formula 1 according to Claim 1 and in which **X** is an organic or organosilicon group bonded via a divalent, substituted or unsubstituted, $C_2$- to $C_{15}$-hydrocarbon radical, which comprises reacting an organopolysiloxane of the general formula 1 in which **X** is a hydrogen atom in the presence of catalytic amounts of hydrosilylation catalyst with a compound comprising an organic or organosilicon group which is bonded to an aliphatically unsaturated, substituted or unsubstituted, $C_2$- to $C_{15}$-hydrocarbon radical.

**Revendications**

1. Organopolysiloxanes de formule générale 1,

$$[R^1Si(OSiR^2{}_2X)_2OSiR^2{}_2O_{1/2}]_a[R_3SiO_{1/2}]_b[R_2SiO]_c$$

$$[RSiO_{3/2}]_d[SiO_2]_e \qquad\qquad (1)$$

dans laquelle

R représente des radicaux hydrocarbure en $C_1$ à $C_{18}$ identiques ou différents, facultativement substitués,
$R^1$ représente un radical hydrocarbure en $C_6$ à $C_{15}$ facultativement substitué, qui contient au moins un cycle phényle,
$R^2$ représente un radical hydrocarbure en $C_1$ à $C_3$,
X représente un atome d'hydrogène ou un groupe organique ou organosilicié lié par l'intermédiaire d'un radical hydrocarbure en $C_2$ à $C_{15}$ bivalent, facultativement substitué, dans lequel un ou plusieurs motifs méthylène du radical hydrocarbure peuvent être remplacés par un atome d'oxygène lié des deux côtés à un atome de carbone;
a représente un nombre entier valant au moins 1 et
b, c, d et e représentent chacun indépendamment les uns des autres, la valeur 0 ou un nombre entier positif, et la somme de a, b, c, d et e vaut au moins 3 ou

$$(HSiMe_2O)_2SiPh\text{-}O\text{-}SiMe_2\text{-}O\text{-}SiMe_3,$$

dans laquelle Me représente un méthyle, et Ph représente un phényle.

**2.** Procédé de préparation des organopolysiloxanes de formule générale 1 suivant la revendication 1, dans laquelle X représente un atome d'hydrogène, dans lequel on fait réagir un organopolysiloxane de formule générale 2,

$$[HO_{1/2}]_a[R_3SiO_{1/2}]_b[R_2SiO]_c[RSiO_{3/2})_d[SiO_2O]_e \qquad\qquad (2),$$

avec au moins un équivalent molaire d'un siloxane de formule générale 3,

$$(HSiR^2{}_2O)_3SiR^1 \qquad\qquad (3),$$

par mole de groupes hydroxyle, en présence d'une quantité catalytique d'un catalyseur d'hydrosilylation en libérant de l'hydrogène,
dans lesquelles
    R, $R^1$, $R^2$, a, b, c, d et e présentent les significations précédentes.

**3.** Procédé de préparation des organopolysiloxanes de formule générale 1 suivant la revendication 1, dans laquelle X représente un groupe organique ou organosilicié lié par l'intermédiaire d'un radical hydrocarbure en $C_2$ à $C_{15}$ bivalent, facultativement substitué, dans lequel on fait réagir un organopolysiloxane de formule générale 1, dans laquelle X représente un atome d'hydrogène, en présence d'une quantité catalytique d'un catalyseur d'hydrosilylation, avec un composé qui est constitué d'un groupe organique ou organosilicié, qui est lié à un radical hydrocarbure en $C_2$ à $C_{15}$ aliphatique insaturé, facultativement substitué.